# EUROPEAN PATENT APPLICATION

(11) **EP 4 201 567 A1**
(43) Date of publication of application: **28.06.2023**
(21) Application number: 22210834.2
(22) Date of filing: 01.12.2022
(51) Int. Cl.: B23H 3/06

(54) **CATHODE COATINGS FOR PULSED ELECTROCHEMICAL MACHINING**

(30) Priority: 22.12.2021 US 202117645689
(71) Applicant: Rolls-Royce Corporation, Indianapolis IN 46225 (US)
(72) Inventor: MUNOZ, Monica Sy, Indianapolis, IN 46225-1103 (US); WARD, Damon, Indianapolis, IN 46225-1103 (US); GARNER, Rusty M., Indianapolis, IN 46225-1103 (US)
(74) Representative: HGF

(57) **Abstract**

An electrochemical machining system includes an anodic workpiece (112) of an electrically conductive metal, and an electrically conductive metallic cathodic tool (114) with an external surface configured to machine the anodic workpiece. At least a portion of the external surface of the cathodic tool has a coating (150) of diamond-like carbon (DLC). The system further includes a current source configured to apply a pulsed direct current to the anodic workpiece and the cathodic tool, and an electrolyte between the anodic workpiece and the cathodic tool.

## Description

### BACKGROUND

Pulsed electrochemical machining (pECM) is a non-contact machining process based on the principles of electrolysis. The pECM operation includes a tool (the cathode) that imparts its shape into a workpiece (the anode) in a mirror image. As the tool moves toward a surface of the workpiece to be machined, a pulsed DC current is applied to the tool and the workpiece. The tool maintains a tiny gap of less than about 10 microns from the surface of the workpiece, and the workpiece dissolves anodically about the tool, taking on the complementary shape of the tool. An electrolyte pumped between the tool and the workpiece removes dissolved metal and heat.

Since the cathodic tool does not physically contact the anodic workpiece, pECM can produce burr-free three-dimensional shapes with little or no tool wear. pECM may be used to machine any conductive metal or alloy, and is particularly well suited for materials, such as superalloys, that are difficult to machine through conventional methods. Materials commonly machined with pECM include, for example, nickel, iron, and titanium-based alloys in a variety of formats such as cast (including single crystal), forged, additively manufactured, and powdered metallurgy.

pECM is well suited for producing high-value metal components intended for use in highly stressed environments such as, for example, orthopedic implants, surgical tools, turbine engine components, turbochargers, rocket motors, heat exchangers, sensors, parts for energy applications, and the like.

### SUMMARY

In general, the present disclosure is directed to pECM systems including a cathodic tool with an external surface configured to machine an anodic workpiece, wherein at least a portion of the external surface of the cathodic tool has a coating including diamond-like carbon (DLC). In some examples, the DLC coating can increase dimensional accuracy when pECM-machining metal alloy workpieces. DLC coatings have a number of beneficial properties that can reduce or eliminate electron flow through the coating. In addition, DLC coatings can have improved wear resistance compared to tools with conventional tool coatings such as, for example, parylene, or adhesives such as epoxies, acrylics and urethanes. In some examples, the DLC coated electrode can provide the capability to generate more precisely machined metal parts. In addition, DLC coatings have excellent heat resistance, lubricity for resistance to galling, and anti-wear properties, all of which are beneficial for use as a dielectric coating for pECM.

In one aspect, the present disclosure is directed to an electrochemical machining system, the system including: an anodic workpiece including an electrically conductive metal; an electrically conductive metallic cathodic tool including an external surface configured to machine the anodic workpiece, wherein at least a portion of the external surface of the cathodic tool has a coating of diamond-like carbon (DLC); a current source configured to apply a pulsed direct current to the anodic workpiece and the cathodic tool; and an electrolyte between the anodic workpiece and the cathodic tool.

In another aspect, the present disclosure is directed to a method for electrochemical machining, the method including: positioning an electrically conductive metallic cathodic tool adjacent to an external surface of a conductive metal workpiece, wherein the tool includes at least one external surface with a coating of diamond-like carbon (DLC); flowing an electrolyte between the tool and the workpiece; applying a pulsed DC current to the tool and the workpiece; and removing a portion of the external surface of the workpiece.

In another aspect, the present disclosure is directed an apparatus including a cathodic tool for pulsed electrochemical machining. The tool includes an external surface with a pattern of structures, the pattern of structures having a coating of a diamond-like carbon (DLC), wherein the coating has a thickness of about 1 micron to about 5 microns.

In another aspect, the present disclosure is directed a process, including applying a mask of a diamond-like carbon (DLC) to a part; and electroplating the part.

The details of one or more embodiments of the invention are set forth in the accompanying drawings and the description below. Other features, objects, and advantages of the invention will be apparent from the description and drawings, and from the claims.

### BRIEF DESCRIPTION OF DRAWINGS

FIG. 1 is schematic cross-sectional view of a pECM system including a cathodic tool without a DLC coating.
FIG. 2 is schematic cross-sectional view of an example of a pECM system according to the present disclosure including a cathodic tool with a DLC coating.
FIG. 3 is a flow chart of an example pECM machining process according to the present disclosure.
FIG. 4 is a photograph in perspective of cathodic tools made according to Example 1 of the present disclosure, with the tool on the left in the photograph including a DLC coating.
FIGS. 5A-5D are photographs of overhead views of coupons machined with the tools of FIG. 4 according to Example 1 of the present disclosure, with the coupons of FIGS. 5A-5B being machined with the non-DLC coated tool shown on the right in FIG. 4, and the coupons of FIGS. 5C-5D being machined with the DLC coated tool shown on the left in FIG. 4.
FIGS. 6A-6B are photometry scans of detailed overhead views of the coupons machined with the tools of FIG. 4, with FIG. 6A showing the coupon of FIG. 5A machined with the non-DLC coated tool shown on the right in FIG. 4, and FIG. 6B showing the coupon of FIG. 5C machined with the DLC coated tool shown on the left in FIG. 4.
FIG. 7A is a representation of a cross section of the coupon of FIG. 5A machined with the non-DLC coated tool shown on the right in FIG. 4, and FIG. 7B is a representation of the cross section of the coupon of FIG. 5C machined with the DLC coated tool shown on the left in FIG. 4.
FIG. 8A is a representation of a cross section of the coupon of FIG. 5A machined with the non-DLC coated tool shown on the right in FIG. 4, and FIG. 8B is a representation of the cross section of the coupon of FIG. 5C machined with the DLC coated tool shown on the left in FIG. 4.

Like symbols in the drawings indicate like elements.

### DETAILED DESCRIPTION

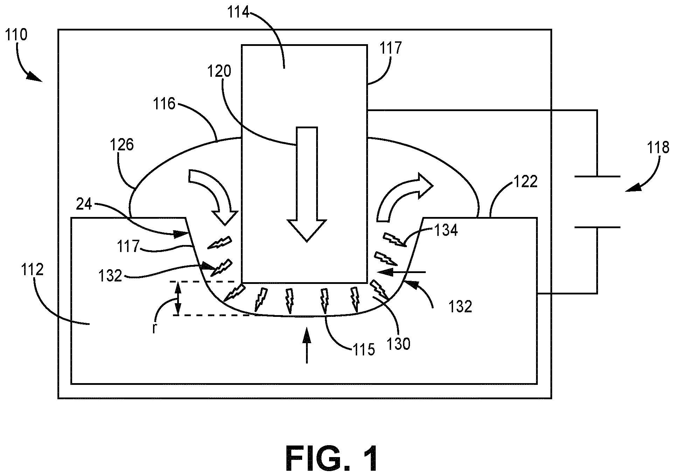

Referring now to FIG. 1, a schematic illustration (which is not to scale) of a system for pulsed electrochemical machining (pECM) 10 includes an anodic metal workpiece 12, a cathodic metal tool 14, and a liquid electrolyte 16 flowing between the workpiece 12 and the tool 14. A direct current (DC) source 18 applies a pulsed direct current to both the workpiece 12 and the tool 14.

As shown schematically in FIG. 1, the tool 14 moves along a machine direction 20 toward a surface 22 of the workpiece 12, and maintains an offset gap r from the surface 22 of about 10 microns. A front face 15 of the tool 14 dissolves metal from the surface 22 to form a front gap 30, and the sides 17 of the tool each dissolve metal from the surface 22 to form side gaps 32. The metal removed from the surface 22 of the workpiece 12 forms a depression 24 therein that has a shape complementary to the shape determined by the front face 15 and the sides 17 of the tool 14. The electrolyte 16 is pumped along a direction 26 between the tool 14 and the workpiece 12 to remove dissolved metal and heat.

As shown in the diagram of FIG. 1, the dimensions and shape of the depression 24 do not exactly mirror the shape of the tool 14. In particular, side machining caused by the sides 17 of the tool 14 can widen the depression 24 in the surface 22 of the workpiece 12, and produce undesirable rounded edges in the sidewalls 34 of the depression 24. The tapering of the sidewalls 34 caused by the sides 17 of the tool 14, alone or in combination with stray corrosion, can diminish the dimensional accuracy of the sidewalls 34 in the depression 24.

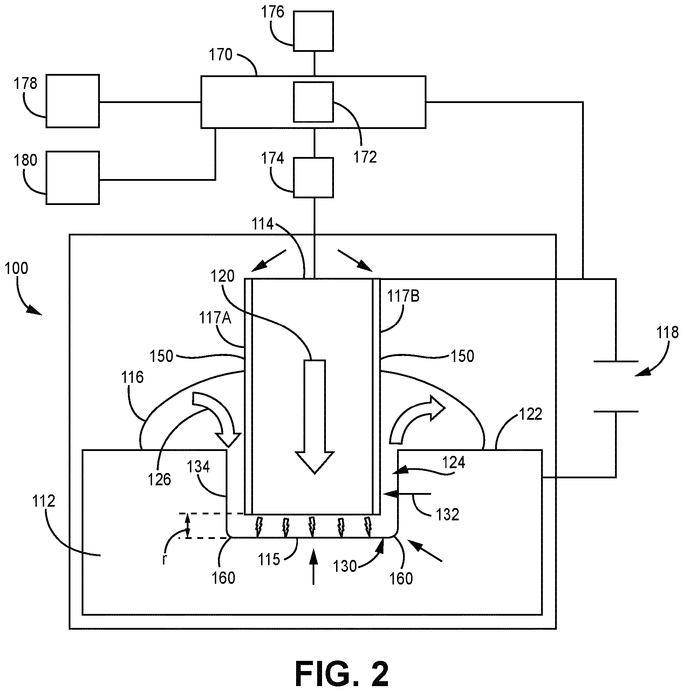

Referring now to FIG. 2, a schematic illustration (which is not to scale) of a system 100 of the present disclosure for pulsed electrochemical machining (pECM) includes an anodic metal workpiece 112, a cathodic metal tool 114, and a liquid electrolyte 116 flowing along a direction 126 between the workpiece 112 and the tool 114. A direct current (DC) source 118 applies a pulsed direct current to both the workpiece 112 and the tool 114.

The metal workpiece 112 and the metal tool 114 may be made from any conductive metal, metal alloy, or ceramic material. Examples of metals commonly used to form the workpiece 112 and the tool 114 include nickel, iron, and titanium-based alloys in a variety of formats such as cast (including single crystal), forged, additively manufactured, and powdered metallurgy. Examples of suitable metals and metal alloys for the workpiece 112 and the metal tool 114 include, but are not limited to, any superalloy such as CMSX-4, MarM247, Haynes 230, Rene N-5, MP35N, and the like, steels such as 4140, A2 tool steel, M4 tool steel, and gear steels such as Ferrium C64, Al 6061, Al 7075, brass, bronze, CoCr, Cu, Ge, Inconels such as 625, 718, and 740h, Mo, Ni, Nitinol, Nitronic 60, Pyrowear 53, stainless steels such as 17-4, 304, 316, and 440C, Ti Grade 1-5, Ti 64, TiAl, and mixtures and combinations thereof.

The cathodic tool 114 includes a front face 115 and opposed sides 117A-117B. A layer of a dielectric coating 150 can be applied to all or a portion of the exposed surfaces of the cathodic tool 114. In the example of FIG. 2, the dielectric coating 150 is applied to the sides 117A-B of the tool 114, and the front face 115 remains free of the dielectric coating 150.

The dielectric coating 150 includes diamond-like carbon (DLC), or consists of DLC, which can include one or more allotropes of carbon, diamond (sp³) and graphite (sp²). Diamond (sp³) has carbon atoms arranged in 3 dimensional cubic lattices while graphite (sp²) has a layered, planar structure in which the layers are arranged in a honeycomb lattice. In some examples, the DLC in the coating 150 is tetrahedral amorphous carbon (ta-C), which consists of sp³ bonded carbon atoms. In some examples, the DLC in the coating 150 includes mixtures of sp² and sp³ carbon phases, and is amorphous, which in this application means that the DLC has no dominant crystalline lattice structure. In some cases, the DLC in the dielectric coating 150 is formed with random alternations between cubic and hexagonal lattices, which creates no long-range order and therefore no fracture planes along which to break. The result is an exceptionally hard material for the dielectric coating 150.

In some examples, the dielectric coating 150 is a thin film consisting of DLC. In some examples, the thin film of DLC can include an additional pre-coat such, as for example, a plasma nitride.

In some examples, the DLC can optionally include additional elements to modify its properties. For example, in some cases the DLC forming the dielectric coating 150 may include mixtures of sp² and sp³ carbon along with dopants such as Si, F, SiOₓ, TiOₓ, W, WC, Cr, CrN, H, and mixtures and combinations thereof.

The control of the properties of the DLC in the dielectric coating 150 can depend on various factors such as, for example, flux characteristics of the chosen deposition technique used to apply the coating (for example, physical vapor deposition (PVD), sputtering, or PaCVD), metal and hydrogen content, sp²:sp³ ratio, dopant, substrate bias voltage, ion energy and ion density as well as substrate temperature. Thus many attributes of the coating 150, such as coating thickness, uniformity, hardness, resistivity, hydrogen content, and the like can be controlled as needed for various applications.

For example, DLC film hardness and sp³ content can be tailored for specific applications. For example, metal and hydrogen containing DLC (Me-DLC or a-C:H:Me) exhibit hardness in the range of about 500-2000HV with 35% sp³, metal free DLC (C-DLC or a-C:H) typically has a hardness of about 1000-4000HV and up to 75% sp³, while tetrahedral amorphous carbon (ta-C) can have a hardness of about 4000-9000HV with 80-85% sp³.

In some examples, which are not intended to be limiting, the dielectric coating 150 includes a DLC coating applied to the cathode 114 by a process such as physical vapor deposition (PVD), plasma assisted physical vapor deposition (PACVD), plasma enhanced physical vapor deposition (PECVD), sputtering, and the like. A non-line of sight application coating process such as PCD can coat internal surfaces of the tool 114, complicated tool geometry, and the like. The thinness of the DLC coating as applied with these processes has a negligible impact on the machining process, and can ensure better dimensional accuracy in the machined part.

In some examples, suitable dielectric coatings 150 include those available from IBC Coatings Technologies, Lebanon, IN, under the trade designation CeraTough, particularly CeraTough 701 and 702, which are Si-doped DLCs. The Si-doped DLCs have a chemical composition of a-C:H:Si and include a mixture of sp² and sp³ carbon. In some examples, the Si doped DLC can include additional dopants such as, for example, Cr, W, and combinations thereof.

In some examples, the dielectric coating 150 has a thickness sufficient to block electron flow through the surface of the tool 114 to which the coating is applied. In some examples, the coating 150 has a thickness of about 1 micron to about 50 microns, or about 1 micron to about 25 microns, or about 1 micron to about 10 microns, or about 1 micron to about 5 microns.

As shown schematically in FIG. 2, the tool 114 moves along a machine direction 120 toward a surface 122 of the workpiece 112, and the front face 115 of the tool 114 maintains an offset gap r from the surface 122 of about 10 microns. Since the front face 115 of the tool 114 is free of the dielectric coating 150, the front face 115 dissolves metal from the surface 122 of the workpiece 112 to form a front gap 130. However, since the sides 117A-B are overlain by the dielectric coating 150 including DLC, the sides 117A-B do not dissolve metal from the surface 122 to form side gaps 132. To mitigate side gap machining caused by the sides 117A-B of the tool 114, the dielectric coating 150 directs electrons to pass through the front face 115 of the tool 114, but limits electron passage through the sides 117A-B. The dielectric coating 150 blocks electrical energy from emanating from the sides 117A-B of the tool 114, which can provide more accurate machining of the sidewalls 134 of the depression 124 formed by the tool 114 in the surface 122 of the workpiece 112. For example, the diminution of side gap machining by the sides 117A-B of the tool 114 reduce tapering of the sidewalls 134, and can form tighter, more dimensionally accurate radii 160 that have a smaller deviation from the shape of the tool 114.

Various components of the system 100 such as, for example, the anodic workpiece 112, the cathodic tool 114, the DC power supply 118, and an electrolyte pumping system 180 may be interfaced with a controller 170 having at least one processor 172. The controller 170 may be configured to control one or more parameters of the system 100 to determine the shape and dimensions of the walls 134 and the radii 160 in the depression 124 in the workpiece 112. In some examples, which are not intended to be limiting, the controller 170 may be configured to mathematically reconstruct the surface geometry of the target surface 122 of the workpiece 112, design routing and geometry of the tool 114 based on the mathematical reconstruction of the surface geometry, to adjust one or more of the angle of the tool 114, the movement of the tool 114 in one or more planes with respect to the workpiece 112, the feed rate of the tool 114 into the depression 124, to adjust a flow rate or direction of the electrolyte 116, and the like.

In some examples, the controller 170 may be configured to process detected signals from one or more sensor systems 174 in or on the system 100. The processor 172 may be integrated with the sensor systems 174, may be integrated with the controller 170, or may be a remote processor functionally connected to the controller 170.

The processor 172 may be any suitable software, firmware, hardware, or combination thereof. The processor 172 may include any one or more microprocessors, controllers, digital signal processors (DSPs), application specific integrated circuits (ASICs), field-programmable gate arrays (FPGAs), or discrete logic circuitry. The functions attributed to the processor 172 may be provided by processing circuitry of a hardware device, e.g., as supported by software and/or firmware.

In some examples, the processor 172 may be coupled to a memory device 176, which may be part of the controller 170 or remote thereto. The memory device 176 may include any volatile or non-volatile media, such as a random-access memory (RAM), read only memory (ROM), non-volatile RAM (NVRAM), electrically erasable programmable ROM (EEPROM), flash memory, and the like. The memory device 176 may be a storage device or other non-transitory medium. The memory device 176 may be used by the processor 172 to, for example, store fiducial information or initialization information corresponding to, for example, surface geometries on the workpiece 112, patterns or designs to be machined into the surface 122 of the workpiece 112, measurements or stored signals from the sensor system 174 of parameters of the system 100. In some examples, the memory device 176 may store determined values, such as information corresponding to detected surface measurements on the workpiece 112, toolpaths for the tool 114, machining rates and times, temperatures and flow rates for the electrolyte 116, and the like, for later retrieval.

In some embodiments, the controller 170 and the processor 172 are coupled to a user interface 178, which may include a display, user input, and output (not shown in FIG. 2). Suitable display devices include, for example, monitor, PDA, mobile phone, tablet computers, and the like. In some examples, user input may include components for interaction with a user, such as a keypad and a display such as a cathode ray tube (CRT) display, a liquid crystal display (LCD) or light emitting diode (LED) display, and the keypad may take the form of an alphanumeric keypad or a reduced set of keys associated with particular functions. In some examples, the displays may include a touch screen display, and a user may interact with user input via the touch screens of the displays. In some examples, the user may also interact with the user input remotely via a networked computing device.

The controller 170 can be configured to control any selected number of functions of the apparatus 100 in response to signals from the processor 172 input manually into the controller 170, or stored in the memory device 176. For example, in some embodiments, the controller may be used to mathematically reconstruct the target surface geometry of the surface 122 of the workpiece 112 and design the routing and geometry of the tool 114, and to generate continuous and conformal printing toolpaths considering the desired pattern or surface geometry to be machined into the workpiece 112.

In some examples, the controller 170 can be configured to generate control signals obtained from, for example, one or more sensors in the sensor system 174, to provide closed loop control of the toolpath patterns for the tool 112.

In various examples, the controller 170 may be adjusted by a variety of manual and automatic means. Automatic means may make use of any number of control algorithms or other strategies to achieve desired conformance to a control toolpath patterns or patterns to be machined into the workpiece 112. For example, standard control schemes as well as adaptive algorithms such as so-called "machine-learning" algorithms may be used. In some examples, controller 170 can utilize information from other sources such as, for example, infrared cameras, to determine the control action decided by algorithms such as machine learning schemes.

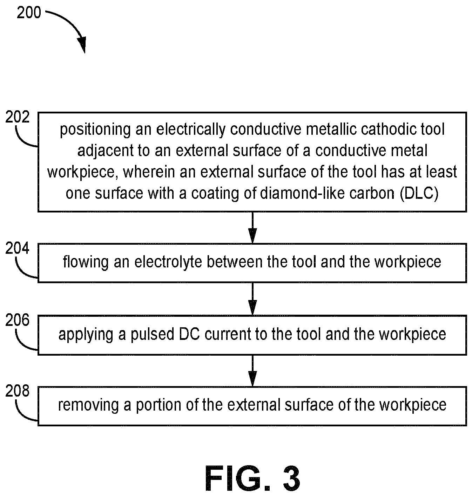

Referring now to FIG. 3, in another aspect, the present disclosure is directed to a method for electrochemical machining 200. In step 202, the method includes positioning an electrically conductive metallic cathodic tool adjacent to an external surface of a conductive metal workpiece, wherein an external surface of the tool has at least one surface with a coating of diamond-like carbon (DLC). In step 204, an electrolyte is flowed between the tool and the workpiece. In step 206, a pulsed DC current is applied to the tool and the workpiece. In step 208, the tool removes a portion of the external surface of the workpiece.
While the present disclosure is directed to use of DLC coatings in pECM processes, DLC coatings may also be used in other processes such as, for example, electroplating. The properties of the DLC coatings described above make these coatings useful as masks for electroplating processes, and provide both greater durability and more precise coverage than conventional electroplating mask materials such as, for example, waxes, lacquers, silicones, metallic tapes, and the like. For example, an electroplating process can include applying a mask of a diamond-like carbon (DLC) to a part, and electroplating the part.

The devices, systems and methods of the present disclosure will now be further described in the following non-limiting examples.

### EXAMPLES

### Example 1

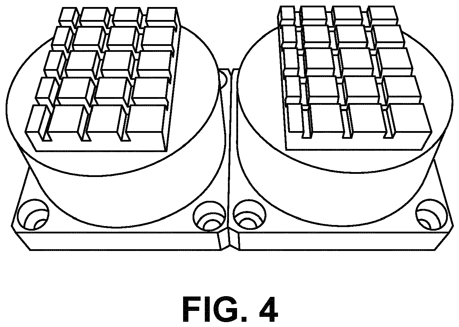

Two 316-stainless steel pECM cathodic tools were produced with a simple grid pattern. One tool, shown on the left in the photograph of FIG. 4, was coated with a Si-doped DLC coating available from IBC Coatings Technologies, Lebanon, IN, under the trade designation CeraTough 0702, and the top face ground off to reveal a substrate for machining. The other tool, shown on the right in FIG. 4, did not include the DLC coating.

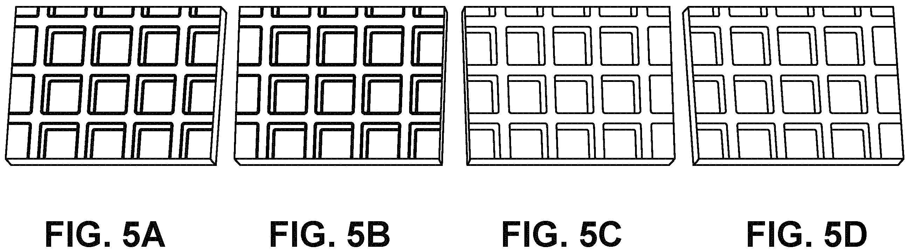

Each tool was utilized under identical pECM conditions to machine two flat coupons each, and the results were analyzed via a 3D scanning system available from GOM GmbH, Braunschweig, DE. The coupons shown in the resultant scans of FIGS. 5A-5B were machined with the uncoated tool, while the coupons shown in FIGS. 5C-5D were machined with the DLC coated tool.

### Example 2

Ten channel width measurements were taken per coupon, and measured with the 3D scanning system, with the results are summarized in Table 1 below.

**Table 1**

| | **Coupon of** **FIG. 5A** **(No DLC)** | **Coupon of** **FIG. 5B** **(No DLC)** | **Coupon of** **FIG. 5C** **(DLC Coating)** | **Coupon of** **FIG. 5D** **(DLC Coating)** |
|---|---|---|---|---|
| **Average Deviation from Tool Dimensions** | 0.013 inch (0.330 mm) | 0.015 inch (0.381 mm) | 0.0035 inch (0.089 mm) | 0.0034 inch (0.086 mm) |
| **Overall Average** | 0.014 inch (0.356 mm) | | 0.0035 inch (0.089 mm) | |

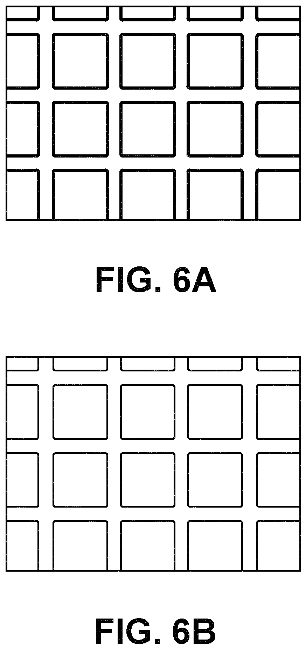

As shown in Table 1, the DLC coated tool produced better dimensional results in the coupons, as the deviation from the tool pattern was reduced from 0.014 inch (0.356 mm) to 0.0035 inch (0.089 mm). As shown in FIGS. 6A-6B, these results are evident visually as well. FIG. 6A shows a detail of a coupon of FIG. 5A, and FIG. 6B shows a detail of the coupon of FIG. 5C. The coupon of FIG. 5C, which was produced with the tool having the DLC coating, showed much crisper lines and more accurate tool pattern reproduction.

### Example 3

In this example, the cross-sections of the coupons of Examples 1-2 above were analyzed with the 3D scanning device, and the results, taken from 10 radii measurements per coupon, are shown in Table 2 below.

**Table 2**

| | **Coupon of** **FIG. 5A** **(No DLC)** | **Coupon of** **FIG. 5B** **(No DLC)** | **Coupon of** **FIG. 5C** **(DLC Coating)** | **Coupon of** **FIG. 5D** **(DLC Coating)** |
|---|---|---|---|---|
| **Average Bottom Radii** | 0.0094 inch (0.239 mm) | 0.0114 inch (0.290 mm) | 0.0065 inch (0.165 mm) | 0.0068 inch (0.173 mm) |
| **Overall Average** | 0.010 inch (0.254 mm) | | 0.0067 inch (0.170 mm) | |

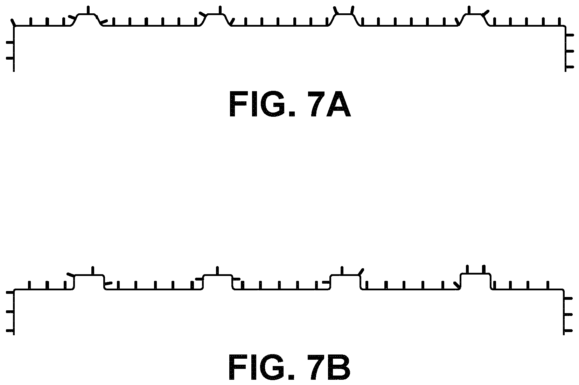

As shown in Table 2, the DLC coated tool produced better results, as the bottom radii of the structures in the coupons produced with this tool were reduced from 0.010 inch (0.254 mm) to 0.0067 inch (0.170 mm). As shown in FIGS. 7A-7B, these results are evident visually as well. FIG. 7A shows a detail of the cross section of the coupon of FIG. 5A, and FIG. 7B shows a detail of the cross-section of the coupon of FIG. 5C. The coupon of FIG. 5C, which was machined with the tool including the DLC coating, showed much more accurate overall tool pattern reproduction, and the cross sections showed less rounding of the corners on the raised channels in the tool pattern.

### Example 4

In this example, the cross-sections of the coupons of Examples 1-2 above were analyzed with the 3D scanning device, and the results, taken from 10 angle measurements per coupon, are shown in Table 3 below.

**Table 3**

| | **Coupon of** **FIG. 5A** **(No DLC)** | **Coupon of** **FIG. 5B** **(No DLC)** | **Coupon of** **FIG. 5C** **(DLC Coating)** | **Coupon of** **FIG. 5D** **(DLC Coating)** |
|---|---|---|---|---|
| **Sidewall Angle** | 110.3° | 108.5° | 90.9° | 92.14° |
| **Overall Average** | 109.4° | | 91.52° | |

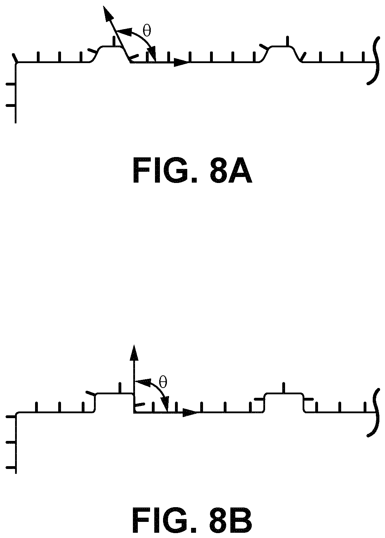

As shown in Table 3, the DLC coated tool produced better results, as the angles between the sidewalls of the channels and the surface of the coupon were closer to the ideal angle of about 90°. As shown in FIGS. 8A-8B, these results are evident visually as well. FIG. 8A shows a detail of the cross section of the workpiece machined with the coupon of FIG. 5A, and FIG. 8B shows a detail of the cross-section of the workpiece machined with the coupon of FIG. 5C. The coupon of FIG. 5C, which was machined with the tool including the DLC coating, showed much more accurate tool pattern reproduction, and the angle between the channel sidewalls (θ in FIGS. 8A-8B) was much closer to 90°.

Various embodiments of the invention have been described. These and other embodiments are within the scope of the following claims.

## Claims

1. An electrochemical machining system, the system comprising:
an anodic workpiece comprising an electrically conductive metal;
an electrically conductive metallic cathodic tool comprising an external surface configured to machine the anodic workpiece, wherein at least a portion of the external surface of the cathodic tool has a coating comprising diamond-like carbon (DLC);
a current source configured to apply a pulsed direct current to the anodic workpiece and the cathodic tool; and
an electrolyte between the anodic workpiece and the cathodic tool.

2. The system of claim 1, wherein the coating has a thickness of about 1 micron to about 50 microns.

3. The system of claim 1 or claim 2, wherein the coating consists of sp³ bonded carbon atoms.

4. The system of claim 1 or claim 2, wherein the coating comprises a mixture of sp² bonded and sp³ bonded carbon atoms.

5. The system of claim 4, wherein the coating further comprises a dopant chosen from Si, Ti, SiOₓ, TiOₓ, W, WC, C, Cr, H, and mixtures and combinations thereof.

6. The system of claim 5, wherein the dopant is Si.

7. The system of any of claims 1-6, wherein the anodic workpiece comprises a metal chosen from Cu, Al, brass, bronze, Ge, Ga, Co, Mo, stainless steel, Ni, Fe, Ti, alloys thereof, and combinations thereof.

8. The system of any of claims 1-7, wherein the metal is a superalloy.

9. A method for electrochemical machining, the method comprising:
positioning an electrically conductive metallic cathodic tool adjacent to an external surface of a conductive metal workpiece, wherein the tool comprises at least one external surface with a coating of diamond-like carbon (DLC);
flowing an electrolyte between the tool and the workpiece;
applying a pulsed DC current to the tool and the workpiece; and
removing a portion of the external surface of the workpiece.

10. The method of claim 9, wherein the coating has a thickness of about 1 micron to about 10 microns.

11. The method of claim 9 or claim 10, wherein the coating comprises a mixture of sp² bonded and sp³ bonded carbon atoms, and wherein the coating comprises a Si dopant compound.

12. The method of any of claims 9-11, wherein the workpiece comprises a superalloy.

13. The method of any of claims 9-12, wherein the external surface of the tool comprises a tool pattern, the tool pattern comprising an arrangement of structures separated by channels having a channel width, and wherein the channels in the tool pattern impart an inverse pattern of lines extending from the surface of the workpiece, the lines in the inverse pattern comprising a line width corresponding to the channel width in the tool pattern, and wherein an average line width in the inverse pattern differs from an average channel width in the tool pattern by less than about 0.1 mm.

14. The method of claim 13, wherein the lines extend from the surface of the workpiece, and wherein an average radius between sidewalls of the lines and the surface of the workpiece is less than about 0.2 mm.

15. The method of claim 13, wherein the lines extend from the surface of the workpiece, and wherein an average angle between sidewalls of the lines and the surface of the workpiece is less than about 92°.
